# EUROPÄISCHE PATENTSCHRIFT

(11) **EP 4 200 162 B1**
(45) Veröffentlichungstag und Bekanntmachung des Hinweises auf die Patenterteilung: **20.12.2023**
(21) Anmeldenummer: 21763324.7
(22) Anmeldetag: 17.08.2021
(51) Int. Cl.: B60Q 1/14, B60Q 1/22, B60Q 1/12

(54) **VERFAHREN ZUM BETRIEB EINES KRAFTFAHRZEUGS UND KRAFTFAHRZEUG**
METHOD FOR OPERATING A MOTOR VEHICLE, AND MOTOR VEHICLE
PROCÉDÉ DE FONCTIONNEMENT D'UN VÉHICULE AUTOMOBILE, ET VÉHICULE AUTOMOBILE

(30) Priorität: 18.08.2020 DE 102020121671
(43) Veröffentlichungstag der Anmeldung: 28.06.2023
(73) Patentinhaber: Audi AG, 85045 Ingolstadt (DE)
(72) Erfinder: SCHMIDT, Valentin, 86633 Neuburg a.d. Donau (DE); ARMBRUSTER, Tilman, 85057 Ingolstadt (DE); REIM, Johannes, 85057 Ingolstadt (DE); DEBELEC, Marcel, 85053 Ingolstadt (DE)
(74) Vertreter: Lindner Blaumeier Patent- und Rechtsanwälte
(86) Internationale Anmeldenummer: PCT/EP2021/072797
(87) Internationale Veröffentlichungsnummer: WO 2022/038117

(56) Entgegenhaltungen:
- EP-A2- 1 488 955
- DE-A1- 3 704 029
- DE-A1-102004 055 882
- DE-A1-102006 039 182
- DE-A1-102015 015 052
- US-A- 5 754 100
- US-A1- 2003 039 124

## Beschreibung

Die Erfindung betrifft ein Verfahren zum Betrieb eines Kraftfahrzeugs, wobei das Kraftfahrzeug eine wenigstens zwei Scheinwerfereinrichtungen umfassende Beleuchtungseinrichtung aufweist, wobei die Scheinwerfereinrichtungen horizontal versetzt an einer Vorderseite des Kraftfahrzeugs angeordnet sind und jeweils ein oder mehrere dimmbare Leuchtmittel aufweisen, wobei durch jede Scheinwerfereinrichtung in Abhängigkeit einer jeweils von dem oder den Leuchtmitteln erzeugten Helligkeit ein sich über einen horizontalen Winkelbereich vor dem Kraftfahrzeug erstreckender Raumbereich ausleuchtbar ist. Weiterhin betrifft die Erfindung ein Kraftfahrzeug.

Bei einer Rückwärtsfahrt eines Kraftfahrzeugs können Situationen auftreten, in denen Hindernisse vor dem Fahrzeug beachtet werden müssen. Dies kann beispielsweise der Fall sein, wenn ein Kraftfahrzeug rückwärts aus einer Parklücke hinausbewegt wird, wobei während der Rückwärtsfahrt eine Lenkbewegung durchgeführt wird. Dabei können vor oder während der Rückwärtsfahrt neben dem Kraftfahrzeug angeordnete Objekte in den Bewegungsbereich der Fahrzeugfront geraten, so dass es wünschenswert ist, diese auch bei schlechten Sichtverhältnissen, beispielsweise bei Dunkelheit, erkennen zu können, um eine unbeabsichtigte Kollision mit diesen Objekten zu vermeiden. Dazu sind aus dem Stand der Technik verschiedene Verfahren bekannt.

In DE 10 2015 015 052 A1 wird ein Verfahren zum Betrieb eines Fahrzeugs beschrieben, bei welchem ein Kurvenlicht bei einer Rückwärtsfahrt des Fahrzeugs entgegengesetzt einer Lenkrichtung abgestrahlt wird.

Aus DE 103 06 108 A1 ist ein Kraftfahrzeug bekannt, welches mindestens einen rechten und mindestens einen linken Kurvenscheinwerfer, welche im vorderen und/oder seitlichen Bereich des Kraftfahrzeugs angeordnet sind, umfasst. Bei einer Bewegung des Kraftfahrzeugs nach vorne in einer Ausparksituation wird zumindest der rechte Kurvenscheinwerfer eingeschaltet, wenn ein den Lenkwinkel verursachender Lenkeinschlag nach links erfolgt ist und umgekehrt.

In DE 37 04 029 A1 wird ein Kraftfahrzeug mit fest eingebauten Kurvenscheinwerfern beschrieben, welche rechts und links an einer Frontseite des Kraftfahrzeugs angeordnet sind. Ab einem bestimmten Lenkeinschlag werden je nach Richtung des Lenkeinschlags unterschiedliche Kontakte geschlossen, so dass entweder der rechte oder der linke Kurvenscheinwerfer eingeschaltet wird. Dadurch wird bei einem Befahren einer Kurve in Rückwärtsfahrt der Bereich der Umgebung ausgeleuchtet, zu dem sich das Vorderteil des Kraftfahrzeugs hin verschwenkt.

DE 103 13 731 A1 offenbart eine Scheinwerfereinrichtung für ein Kraftfahrzeug mit mindestens einer Abblendlichtfunktion, einer Fernlichtfunktion und einer Kurvenlichtfunktion. Dabei wird ein Einparklicht aus dem Abblendlicht und/oder dem Kurvenlicht bei einer Rückwärtsfahrt und einem Lenkeinschlag zum Ausleuchten eines Bereichs seitlich vor dem Kraftfahrzeug zugeschaltet.

Aus EP 1 488 955 A2 ist eine Beleuchtungseinrichtung für ein Kraftfahrzeug bekannt, umfassend eine linksseitige und eine rechtsseitige Lampe. Bei der Feststellung einer Rückwärtsfahrt des Kraftfahrzeugs wird bei einem linksseitigen Lenkeinschlag die linksseitige Lampe ab- und die rechtsseitige Lampe zugeschaltet und bei einem rechtsseitigen Lenkeinschlag die rechtsseitige Lampe ab- und die linksseitige Lampe zugeschaltet.

Der Erfindung liegt die Aufgabe zugrunde, ein verbessertes Verfahren zum Betrieb eines Kraftfahrzeugs anzugeben, welches insbesondere den Betrieb einer wenigstens zwei Scheinwerfereinrichtungen umfassenden Beleuchtungseinrichtung bei Rückwärtsfahrt des Kraftfahrzeugs verbessert.

Zur Lösung dieser Aufgabe ist bei einem Verfahren der eingangs genannten Art erfindungsgemäß vorgesehen, dass vor einer Rückwärtsfahrt bei eingelegtem Rückwärtsgang oder während einer Rückwärtsfahrt des Kraftfahrzeugs in Abhängigkeit eines Lenkeinschlags des Kraftfahrzeugs die Helligkeiten des oder der Leuchtmittel wenigstens einer der Scheinwerfereinrichtungen eingestellt werden,
- wobei bei Verwendung von mehreren Leuchtmitteln umfassenden Scheinwerfereinrichtungen die Leuchtmittel jeweils unterschiedliche Teilbereiche eines Raumbereichs ausleuchten und derart eingestellt werden, dass wenigstens ein der Richtung des Lenkeinschlags gegenüberliegender Teilbereich des jeweiligen Raumbereichs mit einer erhöhten Helligkeit ausgeleuchtet wird und wenigstens ein in der Richtung des Lenkeinschlags liegender Teilbereich des jeweiligen Raumbereichs mit einer reduzierten Helligkeit ausgeleuchtet wird, und/oder
- wobei bei Verwendung von wenigstens ein Leuchtmittel umfassenden Scheinwerfereinrichtungen das wenigstens eine Leuchtmittel den Raumbereich einer in Richtung des Lenkeinschlags angeordneten Scheinwerfereinrichtung ausleuchtet und die Helligkeit des wenigstens einen Leuchtmittels auf einen Wert größer null verringert wird.

Das erfindungsgemäße Verfahren dient dazu, die Leuchtmittel von wenigstens zwei Scheinwerfereinrichtungen des Kraftfahrzeugs einzustellen. Das Kraftfahrzeug umfasst wenigstens zwei Scheinwerfereinrichtungen mit mehreren dimmbaren Leuchtmitteln, welche horizontal versetzt zueinander an einer Vorderseite des Kraftfahrzeugs angeordnet sind und/oder zwei Scheinwerfereinrichtungen mit jeweils wenigstens einem dimmbaren Leuchtmittel, welche ebenfalls horizontal versetzt zueinander an einer Vorderseite des Kraftfahrzeugs angeordnet sind. Jede der Scheinwerfereinrichtungen leuchtet einen der jeweiligen Scheinwerfereinrichtung zugeordneten Raumbereich vor dem Fahrzeug aus, wobei sich jeder der Raumbereiche über einen horizontalen Winkelbereich erstreckt.

Das erfindungsgemäße Verfahren hat den Vorteil, dass durch das Ausleuchten eines der Richtung des Längseinschlags gegenüberliegenden Teilbereichs eines von einer mehrere Leuchtmittel umfassenden Scheinwerfereinrichtung ausgeleuchteten Raumbereichs vor dem Fahrzeug mit einer erhöhten Helligkeit eine bessere Erkennbarkeit von dort befindlichen Objekten erreicht wird. Diese Erkennbarkeit von Objekten kann zusätzlich oder alternativ auch dadurch verbessert werden, dass die Helligkeit einer wenigstens ein Leuchtmittel umfassenden Scheinwerfereinrichtung, welche in Richtung des Lenkeinschlags angeordnet ist, gedimmt wird. Bei einem Lenkeinschlag nach links kann also ein rechter Teilbereich des ausleuchtbaren Raumbereichs wenigstens einer der Scheinwerfereinrichtungen mit mehreren Leuchtmitteln mit einer erhöhten Helligkeit ausgeleuchtet werden.

Zusätzlich oder alternativ dazu kann ein Leuchtmittel einer wenigstens ein Leuchtmittel umfassenden Scheinwerfereinrichtung, welche links am Kraftfahrzeug angeordnet ist, gedimmt, also mit einer reduzierten Helligkeit betrieben, werden. Das Dimmen des Leuchtmittels bedeutet in diesem Zusammenhang, dass eine Helligkeit des Leuchtmittels verringert wird, das Leuchtmittel jedoch nicht ausgeschaltet wird, mithin also, dass eine Reduktion der Helligkeit des Leuchtmittels auf einen Wert größer null vorgenommen wird. Entsprechend kann bei Rückwärtsfahrt und einem Lenkeinschlag nach rechts also ein linker Teilbereich wenigstens einer der Scheinwerfereinrichtungen mit mehreren Leuchtmitteln mit einer erhöhten Helligkeit ausgeleuchtet werden. Zusätzlich oder alternativ dazu kann ein Leuchtmittel einer wenigstens ein Leuchtmittel umfassenden Scheinwerfereinrichtung, welche rechts am Kraftfahrzeug angeordnet ist, gedimmt werden.

Insbesondere kann bei den wenigstens zwei Scheinwerfereinrichtungen mit mehreren Leuchtmitteln jeweils eine Ausleuchtung eines der Richtung des Lenkeinschlags gegenüberliegenden Teilbereichs erfolgen. Bei den wenigstens ein Leuchtmittel umfassenden Scheinwerfereinrichtungen kann die der Richtung des Lenkeinschlags gegenüberliegend angeordnete Scheinwerfereinrichtung insbesondere mit einer maximalen Helligkeit betrieben werden.

Das Verändern der Helligkeit in dem Teilbereich bzw. den Teilbereichen der mehrere Leuchtmittel umfassenden Scheinwerfereinrichtungen und/oder das Dimmen des Leuchtmittels der wenigstens ein Leuchtmittel umfassenden Scheinwerfereinrichtung erfolgt insbesondere bei Scheinwerfereinrichtungen, welche bei einer Rückwärtsfahrt ohne einen Lenkeinschlag bereits in Betrieb sind und/oder für einen derartigen Betrieb vorgesehen sind. Dabei können die mehrere Leuchtmittel umfassenden Scheinwerfereinrichtungen mit einer normalen Helligkeitsverteilung betrieben werden, bei der insbesondere ein mittlerer Teilbereich des Raumbereichs mit einer erhöhten Helligkeit und randseitige Teilbereiche des Raumbereichs jeweils mit einer reduzierten Helligkeit ausgeleuchtet werden.

Zusätzlich oder alternativ dazu können die wenigstens ein Leuchtmittel umfassenden Scheinwerfereinrichtungen jeweils bei Rückwärtsfahrt ohne Lenkeinschlag mit einer maximalen Helligkeit und/oder mit einer gegenüber einer maximalen Helligkeit gedimmten Helligkeit betrieben werden. Es ist auch möglich, dass die wenigstens ein Leuchtmittel umfassenden Scheinwerfereinrichtungen jeweils bei Rückwärtsfahrt ohne Lenkeinschlag ausgeschaltet sind.

Bei einer mehrere Leuchtmittel umfassenden Scheinwerfereinrichtung kann durch unterschiedliche Helligkeiten der mehreren Leuchtmittel eine unterschiedliche Helligkeitsverteilung in dem von der Scheinwerfereinrichtung ausgeleuchteten Raumbereich, welcher sich über einen horizontalen Winkelbereich vor dem Kraftfahrzeug erstreckt, erzeugt werden. Die Helligkeitsverteilung in diesem Raumbereich, mithin also die Helligkeitsverteilung über dem horizontalen Winkelbereich, in dem sich der Raumbereich erstreckt, kann durch unterschiedliche Helligkeiten der Leuchtmittel erzeugt werden, welche insbesondere jeweils einem Teilbereich des horizontalen Winkelbereichs bzw. des Raumbereichs zugeordnet sind.

Durch das Erhöhen oder das Dimmen der Helligkeit der Leuchtmittel bzw. durch das Abschalten eines oder mehrerer Leuchtmittel kann die Helligkeitsverteilung über den horizontalen Winkelbereich in dem Raumbereich verändert werden. Dies ermöglicht es, dass bei einer Rückwärtsfahrt und bei Vorliegen eines Lenkeinschlags die Helligkeit des oder der Leuchtmittel derart eingestellt werden, dass wenigstens der der Richtung des Lenkeinschlags gegenüberliegende Teilbereich des Raumbereichs mit einer erhöhten Helligkeit ausgeleuchtet wird. Dies kann z. B. dadurch geschehen, dass die dem Lenkeinschlag gegenüberliegenden Teilbereich des Raumbereichs zugeordneten Leuchtmittel der Scheinwerfereinrichtung zugeschaltet und/oder mit einer gegenüber dem Normalbetrieb für eine Fahrt ohne Lenkeinschlag erhöhten Helligkeit betrieben werden.

Das Ausleuchten des Raumbereichs durch eine mehrere Leuchtmittel umfassende Scheinwerfereinrichtung mit einer sich über den horizontalen Winkelbereich des Raumbereichs erstreckenden Helligkeitsverteilung kann als das Ausleuchten des Raumbereichs entsprechend einer Dimmkennlinie aufgefasst werden, wobei die Dimmkennlinie den Helligkeitsverlauf bzw. die von den jeweils einem Unterabschnitt des Winkelbereich zugeordneten, die jeweiligen Unterabschnitte ausleuchtenden Leuchtmittel erzeugten und gegebenenfalls gedimmten Helligkeiten beschreibt.

Eine wenigstens ein Leuchtmittel umfassende Scheinwerfereinrichtung, welche in Richtung des Lenkeinschlags angeordnet ist, kann mit einer reduzierten Helligkeit betrieben werden, um die Sichtbarkeit von der Richtung des Lenkeinschlages gegenüberliegenden Objekten zu verbessern. Die Helligkeit des wenigstens einen Leuchtmittels kann dabei insbesondere derart abgedimmt werden, dass zumindest teilweise auch noch eine Ausleuchtung des von der Scheinwerfereinrichtung abgedeckten Raumbereichs in Richtung des Lenkeinschlags erfolgt.

Durch das Dimmen, also das Reduzieren der Helligkeit, des wenigstens einen Leuchtmittels der wenigstens einen Leuchtmittel umfassenden Scheinwerfereinrichtung kann vorteilhaft ein elektrischer Energiebedarf der Beleuchtungseinrichtung reduziert werden, was sich beispielsweise bei Kraftfahrzeugen mit einem elektrischen Traktionsantrieb vorteilhaft auf eine noch zur Verfügung stehende Reichweite des elektrischen Fahrbetriebs auswirkt.

Dass sich das Kraftfahrzeug vor einer Rückwärtsfahrt oder in einer Rückwärtsfahrt befindet, kann beispielsweise dadurch festgestellt werden, dass ein Rückwärtsgang des Kraftfahrzeugs eingelegt ist und/oder dass eine Kraftfahrzeuggeschwindigkeit vorliegt, welche eine Rückwärtsfahrt des Kraftfahrzeugs bewirkt. Das Vorliegen eines Lenkeinschlags des Kraftfahrzeuges kann beispielsweise durch Verwendung eines einen Lenkwinkel des Lenkeinschlags bestimmenden Lenkwinkelsensor des Kraftfahrzeugs und/oder über eine Bestimmung einer Lenkradstellung und/oder einer Radstellung oder Ähnliches erfolgen. Dazu kann ein Steuergerät, welches zur Durchführung des erfindungsgemäßen Verfahrens ausgebildet ist, mit einem Getriebe und/oder einem Geschwindigkeitssensor bzw. mit einem Lenkwinkelsensor, einem Sensor zur Feststellung der Lenkradstellung und/oder der Radstellung und/oder weiteren Sensoren verbunden sein. Das Steuergerät kann zusätzlich oder alternativ auch mit einer Lenkungsregelung, einer Fahrwerkselektronik und/oder einer Antriebselektronik verbunden sein, welche ebenfalls Informationen über eine Rückwärtsfahrt, das Vorliegen eines Lenkeinschlags und/oder einen Lenkwinkel an das Steuergerät übermitteln können.

Die Beleuchtungseinrichtung des Kraftfahrzeugs kann mehrere Scheinwerfereinrichtungen umfassen, welche jeweils mehrere Leuchtmittel aufweisen, wobei zwei dieser mehrere Leuchtmittel aufweisenden Scheinwerfereinrichtungen horizontal versetzt an der Vorderseite des Kraftfahrzeugs angeordnet sind. Zusätzlich oder alternativ kann die Beleuchtungseinrichtung auch zwei wenigstens ein Leuchtmittel umfassende Scheinwerfereinrichtungen aufweisen, welche ebenfalls versetzt an der Vorderseite des Kraftfahrzeugs angeordnet sind. Als dimmbares Leuchtmittel können dabei Glühbirnen, welche zum Beispiel über eine Stromstärke eines Stroms durch die Glühbirne, oder Leuchtdioden (LEDs), welche zur Dimmung zum Beispiel mittels Pulsweitenmodulation ansteuerbar sind, eingesetzt werden.

Erfindungsgemäß ist vorgesehen, dass die Helligkeiten der Leuchtmittel der wenigstens einen mehrere Leuchtmittel umfassenden Scheinwerfereinrichtung derart eingestellt werden, dass wenigstens ein in der Richtung des Lenkeinschlags liegender Teilbereich des jeweiligen Raumbereichs mit einer reduzierten Helligkeit ausgeleuchtet wird. Dies kann weiter dazu beitragen, dass ein der Richtung des Lenkeinschlags gegenüberliegender Teilbereich, welcher mit einer erhöhten Helligkeit ausgeleuchtet wird, zu einer besseren Erkennbarkeit von in diesem Teilbereich angeordneten Objekten beiträgt. Durch das Reduzieren eines in Richtung des Lenkeinschlags liegenden Teilbereichs erfolgt eine von einem Benutzer des Kraftfahrzeugs wahrnehmbare Verschiebung einer von der Scheinwerfereinrichtung in dem ausleuchtbaren Raumbereich erzeugten Helligkeitsverteilung, insbesondere eine Verlagerung eines Helligkeitsschwerpunkts in die dem Lenkeinschlag gegenüberliegende Richtung.

In einer bevorzugten Ausgestaltung der Erfindung kann vorgesehen sein, dass als die mehrere Leuchtmittel umfassenden Scheinwerfereinrichtungen zur Erzeugung eines Abbiegelichts und/oder zur Erzeugung eines Abblendlichts ausgebildete Scheinwerfereinrichtungen verwendet werden. Durch das Verwenden der mehrere Leuchtmittel umfassenden Scheinwerfereinrichtungen zur Erzeugung des Abbiegelichts und/oder zur Erzeugung des Abblendlichts wird es ermöglicht, das Abbiegelicht bzw. das Abblendlicht jeweils mit einer unterschiedlichen Helligkeitsverteilung über den horizontalen Winkelbereich bzw. mit einer unterschiedlichen Dimmkennlinie zu betreiben, so dass durch die Scheinwerfereinrichtungen über die Helligkeiten der einzelnen Leuchtmittel eine Helligkeitsverteilung in den von den Scheinwerfereinrichtungen jeweils ausleuchtbaren Raumbereichen erzeugt werden kann. Eine zur Erzeugung eines Abblendlichts ausgebildete Scheinwerfereinrichtung und eine zur Erzeugung eines Abbiegelichts ausgebildete Scheinwerfereinrichtung können in jeweils separaten Gehäusen angeordnet sein. Alternativ können eine zur Erzeugung eines Abblendlichts ausgebildete Scheinwerfereinrichtung und eine zur Erzeugung eines Abbiegelichts ausgebildete Scheinwerfereinrichtung auch in einem gemeinsamen Gehäuse, insbesondere einem gemeinsamen Kraftfahrzeugscheinwerfer, angeordnet sein.

Erfindungsgemäß kann vorgesehen sein, dass Scheinwerfereinrichtungen mit wenigstens zwei Segmenten verwendet werden, wobei jedem Segment einer der Scheinwerfereinrichtungen wenigstens eines der Leuchtmittel der Scheinwerfereinrichtung zugeordnet ist und jedes Segment zur Ausleuchtung eines Teilbereichs des Raumbereichs ausgebildet ist. Es ist möglich, dass jedem horizontalen Winkelbereich mehr als ein Leuchtmittel bzw. dass einem Unterabschnitt des horizontalen Winkelbereichs, in welchem von der Scheinwerfereinrichtung eine Ausleuchtung erfolgen kann, jeweils mehrere Segmente zugeordnet sind.

Die Leuchtmittel und/oder die Segmente können beispielsweise in Form einer Matrix aus mehreren Reihen angeordnet werden, wobei jeweils durch eine Reihe von Leuchtmitteln der horizontale Winkelbereich abgedeckt wird. Die mehrere Leuchtmittel umfassenden Scheinwerfereinrichtungen können insbesondere Matrix-Scheinwerfer sein. Durch das Verwenden mehrerer, beispielsweise übereinander angeordneter, Reihen von Leuchtmitteln wird es ermöglicht, auch eine vertikale Helligkeitsverteilung in dem Raumbereich durch die Helligkeit der jeweilig den Segmenten zugeordneten Leuchtmittel einzustellen.

Die Anzahl der Segmente bzw. die Anzahl von Leuchtmitteln in den Scheinwerfereinrichtungen ist grundsätzlich beliebig, insbesondere können zwischen 2 und 100 Segmente pro Scheinwerfereinrichtung verwendet werden. Eine beispielsweise als Abbiegelicht verwendete, mehrere Leuchtmittel umfassende Scheinwerfereinrichtung kann z. B. zwischen 2 und 10, insbesondere zwischen 3 und 5, Segmente umfassen. Eine zur Erzeugung eines Abblendlichts ausgebildete Scheinwerfereinrichtung mit mehreren Leuchtmitteln kann eine größere Anzahl von Leuchtmitteln, beispielsweise zwischen 10 und 25 Leuchtmitteln, umfassen.

In einer bevorzugten Ausgestaltung der Erfindung kann vorgesehen sein, dass die Leuchtmittel einer zur Erzeugung eines Abblendlichts ausgebildeten Scheinwerfereinrichtung und das oder die Leuchtmittel einer zur Erzeugung eines Abbiegelichts ausgebildeten Scheinwerfereinrichtung derart angesteuert werden, dass die jeweils ausgeleuchteten Raumbereiche aneinander anschließen oder teilweise überlappen, wobei eine zumindest im Wesentlichen kontinuierliche Helligkeitsverteilung über den sich ergebenden horizontalen Gesamtwinkelbereich erzeugt wird.

Zusätzlich zu der mehrere Leuchtmittel umfassenden, zur Erzeugung eines Abblendlichts ausgebildeten Scheinwerfereinrichtung kann eine Ausleuchtung des dem Lenkeinschlag gegenüberliegenden Teilbereichs des von der Scheinwerfereinrichtung ausleuchtbaren Raumbereichs dadurch verbessert werden, dass zusätzlich eine ein oder mehrere Leuchtmittel umfassende Scheinwerfereinrichtung, welche zur Erzeugung eines Abbiegelichts ausgebildet ist, derart angesteuert wird, dass der von der zur Erzeugung des Abbiegelichts ausgebildeten Scheinwerfereinrichtung ausgeleuchtete Raumbereich an den von der zur Erzeugung des Abblendlichts ausgebildeten Scheinwerfereinrichtung ausgeleuchteten Raumbereich angrenzt. Der Raumbereich, welcher von der zur Erzeugung des Abbiegelicht ausgebildeten Scheinwerfereinrichtung ausgeleuchtet wird, kann insbesondere direkt an den von der zur Erzeugung des Abblendlichts ausgebildeten Scheinwerfereinrichtung ausgeleuchteten Raumbereichs anschließen und/oder teilweise mit diesem überlappen. Durch das Erzeugen einer zumindest im Wesentlichen kontinuierlichen Helligkeitsverteilung wird eine insgesamt als angenehm empfundene Ausleuchtung des sich über den ergebenden horizontalen Gesamtwinkelbereichs erstreckenden Gesamtraumbereich, welcher sich aus den jeweils von den zwei Scheinwerfereinrichtungen ausgeleuchteten Raumbereichen zusammensetzt, ermöglicht.

Erfindungsgemäß kann vorgesehen sein, dass die Helligkeit, mit der der Teilbereich ausgeleuchtet wird, in Abhängigkeit eines Lenkwinkels des Lenkeinschlags, insbesondere kontinuierlich oder in Intervallen, erhöht wird. Dabei wird nicht nur die Richtung eines Lenkeinschlags beachtet, sondern auch wie stark eingeschlagen wird, mithin also mit welchem Lenkwinkel eingeschlagen wird, wobei insbesondere bei einem größeren Lenkwinkel die Helligkeit, mit der der Teilbereich ausgeleuchtet wird, erhöht wird.

In einer bevorzugten Ausgestaltung der Erfindung kann vorgesehen sein, dass die Position des Teilbereichs bezogen auf den horizontalen Winkelbereich des Raumbereichs in Abhängigkeit eines Lenkwinkels des Lenkeinschlags, insbesondere kontinuierlich oder in Intervallen, geändert wird. Auf diese Weise kann insbesondere bei einem größeren Lenkwinkel eine weitere Verschiebung des Teilbereichs in die der Richtung des Lenkeinschlags entgegengesetzten Richtung erfolgen, so dass immer weiter außen ausgeleuchtet wird, je stärker eingeschlagen wird bzw. je größer der Lenkwinkel ist.

Die Änderung kann dabei in Intervallen erfolgen, wobei insbesondere verschiedenen Lenkwinkelintervallen verschiedene Positionen des Teilbereichs zugeordnet sind. Es ist auch möglich, dass die Intervalle derart klein gewählt werden, dass eine als kontinuierlich wahrgenommene Positionsänderung des Teilbereichs erreicht wird, mithin also beim Erhöhen des Lenkwinkels bzw. einem stärken Einschlagen der Teilbereich, welcher mit einer erhöhten Helligkeit ausgeleuchtet wird, in die der Richtung des Lenkeinschlags entgegengesetzten Richtung des Raumbereichs verschoben wird. Entsprechend kann der Teilbereich mit der erhöhten Helligkeit bei abnehmenden Lenkwinkel auch wieder in die Richtung des Lenkeinschlags bewegt werden.

Erfindungsgemäß kann vorgesehen sein, dass die Helligkeit des wenigstens einen Leuchtmittels einer in der Richtung des Lenkeinschlags angeordneten und zur Erzeugung eines Abbiegelichts ausgebildeten Scheinwerfereinrichtung gedimmt wird. Eine gegebenenfalls vorhandene weitere, wenigstens ein Leuchtmittel umfassende Scheinwerfereinrichtung, welche zur Erzeugung eines Abbiegelichts ausgebildet ist, und zu der Richtung des Lenkeinschlags gegenüberliegend angeordnet ist, kann dabei insbesondere unverändert, das heißt mit einer bei Beginn der Rückwärtsfahrt bereits vorliegenden Helligkeit, betrieben werden.

In einer bevorzugten Ausgestaltung der Erfindung kann vorgesehen sein, dass die Helligkeit des wenigstens einen Leuchtmittels der in der Richtung des Lenkeinschlags angeordneten Scheinwerfereinrichtung in Abhängigkeit eines Lenkwinkels des Lenkeinschlags, insbesondere kontinuierlich oder in Intervallen, gedimmt wird. Insbesondere kann stärker gedimmt werden, wenn der eingeschlagene Lenkwinkel größer wird, so dass die Helligkeit, mit der die Scheinwerfereinrichtung ihren zugeordneten Raumbereich ausleuchtet, abnimmt, je größer der eingeschlagene Lenkwinkel ist.

In einer bevorzugten Ausgestaltung der Erfindung kann vorgesehen sein, dass die Helligkeiten des oder der Leuchtmittel in Abhängigkeit einer Umgebungshelligkeit eingestellt bzw. gedimmt werden. Bei einer Umgebungshelligkeit, welche über einem Grenzwert für die Umgebungshelligkeit liegt, kann insbesondere kein Ansteuern der Scheinwerfereinrichtungen vorgenommen werden. Dies kann insbesondere der Fall sein, wenn es in der Umgebung derart hell ist, dass kein Scheinwerferbetrieb des Kraftfahrzeugs notwendig ist und/oder insbesondere zur Erzeugung eines Abblendlichts ausgebildete Scheinwerfereinrichtungen aufgrund der Umgebungshelligkeit nicht in Betrieb sind, mithin also alle ihre Leuchtmittel abgeschaltet sind. In einem solchen Fall kann darauf verzichtet werden, bei einer Rückwärtsfahrt eine Verschiebung der Dimmkennlinie bzw. einer Änderung der Helligkeitsverteilung in dem von der Scheinwerfereinrichtung jeweils ausgeleuchteten Raumbereich vorzusehen.

In einer bevorzugten Ausgestaltung der Erfindung kann vorgesehen sein, dass die Helligkeiten des oder der Leuchtmittel erst bei Überschreiten wenigstens eines Grenzwerts für den Lenkwinkel des Lenkeinschlags eingestellt bzw. gedimmt werden. Dadurch kann vermieden werden, dass bei einer Rückwärtsfahrt des Kraftfahrzeugs, bei der es aufgrund von Bodenunebenheiten oder Ähnlichem zu einem leicht um eine Nullstellung variierenden Lenkeinschlag kommt, bereits eine Ansteuerung der Leuchtmittel und somit eine Änderung der von den Scheinwerfereinrichtungen jeweils in den Raumbereich abgestrahlten Helligkeit erfolgt. Als Grenzwert für den Lenkwinkel können beispielsweise Lenkwinkel zwischen 1° und 25°, insbesondere von 5°, 10°, 15° oder 20° gewählt werden. Falls ein Lenkwinkel unterhalb des Grenzwerts für den Lenkwinkel vorliegt, können die Scheinwerfereinrichtungen wie vor oder bei Beginn der Rückwärtsfahrt betrieben werden.

In einer bevorzugten Ausgestaltung der Erfindung kann vorgesehen sein, dass bei einem Lenkeinschlag unterhalb des Grenzwerts wenigstens ein Leuchtmittel umfassende und zur Erzeugung eines Abbiegelichts ausgebildete Scheinwerfereinrichtungen mit einer maximalen Helligkeit betrieben, gedimmt betrieben oder abgeschaltet werden. Ob die zur Erzeugung eines Abbiegelichts ausgebildeten Scheinwerfereinrichtungen jeweils mit maximaler Helligkeit betrieben, mit einer gedimmten Helligkeit betrieben oder abgeschaltet werden, kann vorgegeben sein oder zum Beispiel in Abhängigkeit einer Umgebungshelligkeit ausgewählt werden. Auch das Ausmaß bzw. die Stärke einer Dimmung des oder der Leuchtmittel der zur Erzeugung eines Abbiegelichts ausgebildeten Scheinwerfereinrichtungen kann zum Beispiel in Abhängigkeit einer Umgebungshelligkeit bestimmt werden.

Erfindungsgemäß kann vorgesehen sein, dass der Grenzwert für den Lenkwinkel für einen Lenkeinschlag nach links und für einen Lenkeinschlag nach rechts gleich oder unterschiedlich ist. Durch die Wahl unterschiedlicher Grenzwerte kann die Position eines Fahrers im Kraftfahrzeug berücksichtigt werden, da sich dieser je nach Ausbildung des Kraftfahrzeugs auf der linken oder der rechten Seite des Kraftfahrzeugs befindet.

In einer bevorzugten Ausgestaltung der Erfindung kann vorgesehen sein, dass die Änderung der Helligkeit bzw. die Dimmung rückgängig gemacht und/oder wenigstens eine der Scheinwerfereinrichtungen ausgeschaltet wird, wenn die Rückwärtsfahrt beendet wird und/oder wenn eine Geschwindigkeit des Kraftfahrzeugs in Vorwärtsrichtung einen Geschwindigkeitsschwellwert überschreitet. Das Beenden einer Rückwärtsfahrt kann analog zu dem Feststellen einer Rückwärtsfahrt, wie es vorangehend beschrieben wurde, bestimmt werden. Beispielsweise kann von einer Beendigung der Rückwärtsfahrt ausgegangen werden, wenn ein erster Gang, eine Fahrstellung (D) oder einer Neutralstellung (N) eines Getriebes eingelegt bzw. eingestellt wird. Auch bei Vorliegen einer Geschwindigkeit des Kraftfahrzeugs in Vorwärtsrichtung kann die Änderung der Helligkeit bzw. die Dimmung, insbesondere kontinuierlich oder in Intervallen, wieder rückgängig gemacht werden bzw. die oder mehrere Scheinwerfereinrichtungen ausgeschaltet werden, wenn das Kraftfahrzeug vorwärts fährt und/oder die Geschwindigkeit des Kraftfahrzeugs in Vorwärtsrichtung einen Geschwindigkeitsschwellwert überschreitet.

Für ein erfindungsgemäßes Kraftfahrzeug ist vorgesehen, dass es eine wenigstens zwei Scheinwerfereinrichtungen umfassende Beleuchtungseinrichtung sowie ein Steuergerät zur Steuerung der Beleuchtungseinrichtung umfasst, wobei die Scheinwerfereinrichtungen horizontal versetzt an einer Vorderseite des Kraftfahrzeugs angeordnet sind und jeweils ein oder mehrere dimmbare Leuchtmittel aufweisen, wobei durch jede Scheinwerfereinrichtung in Abhängigkeit einer jeweils von dem wenigstens einen Leuchtmittel erzeugten Helligkeit ein sich über einen horizontalen Winkelbereich vor dem Kraftfahrzeug erstreckender Raumbereich ausleuchtbar ist, wobei das Steuergerät zur Durchführung des erfindungsgemäßen Verfahrens ausgebildet ist.

Bei dem Kraftfahrzeug kann es sich um ein über einen Verbrennungsmotor und/oder einen Elektromotor angetriebenes Kraftfahrzeug handeln. Das Kraftfahrzeug kann insbesondere zwei jeweils mehrere Leuchtmittel umfassende Scheinwerfereinrichtungen aufweisen, welche jeweils zur Erzeugung eines Abblendlichts ausgebildet sind. Zusätzlich kann das Kraftfahrzeug zwei wenigstens ein Leuchtmittel umfassende Scheinwerfereinrichtungen aufweisen, welche jeweils zur Erzeugung eines Abbiegelichts ausgebildet sind. Das Steuergerät des Kraftfahrzeugs kann mit einem Getriebe und/oder mit einem Sensor zur Feststellung einer Lenkradposition und/oder einer Radposition und/oder einem Lenkwinkelsensor verbunden sein, wobei entsprechende Messwerte an das Steuergerät übermittelt werden, um das Vorliegen einer Rückwärtsfahrt, das Vorhandensein und die Richtung eines Lenkeinschlags und/oder einen Lenkwinkel zu bestimmen. Zusätzlich oder alternativ kann das Steuergerät mit einer Lenkungsregelung, einer Fahrwerkselektronik und/oder einer Antriebselektronik des Kraftfahrzeugs verbunden sein, von welchen ebenfalls Informationen zu einer Rückwärtsfahrt, dem Vorliegen eines Lenkeinschlags, einem Lenkwinkel eines Lenkeinschlags und/oder weitere Informationen an das Steuergerät übermittelt werden können.

Weitere Vorteile und Einzelheiten der Erfindung ergeben sich aus den im Folgenden beschriebenen Ausführungsbeispielen sowie anhand der Zeichnungen. Diese sind schematische Darstellungen und zeigen:
- Fig. 1: ein Ausführungsbeispiel eines erfindungsgemäßen Kraftfahrzeugs in einer ersten Situation zur Erläuterung eines Ausführungsbeispiels eines erfindungsgemäßen Verfahrens,
- Fig. 2: das Ausführungsbeispiel des erfindungsgemäßen Kraftfahrzeugs in einer zweiten Situation zur Erläuterung eines Ausführungsbeispiels eines erfindungsgemäßen Verfahrens, und
- Fig. 3: eine Ansicht einer Vorderseite des Ausführungsbeispiels des erfindungsgemäßen Kraftfahrzeugs.

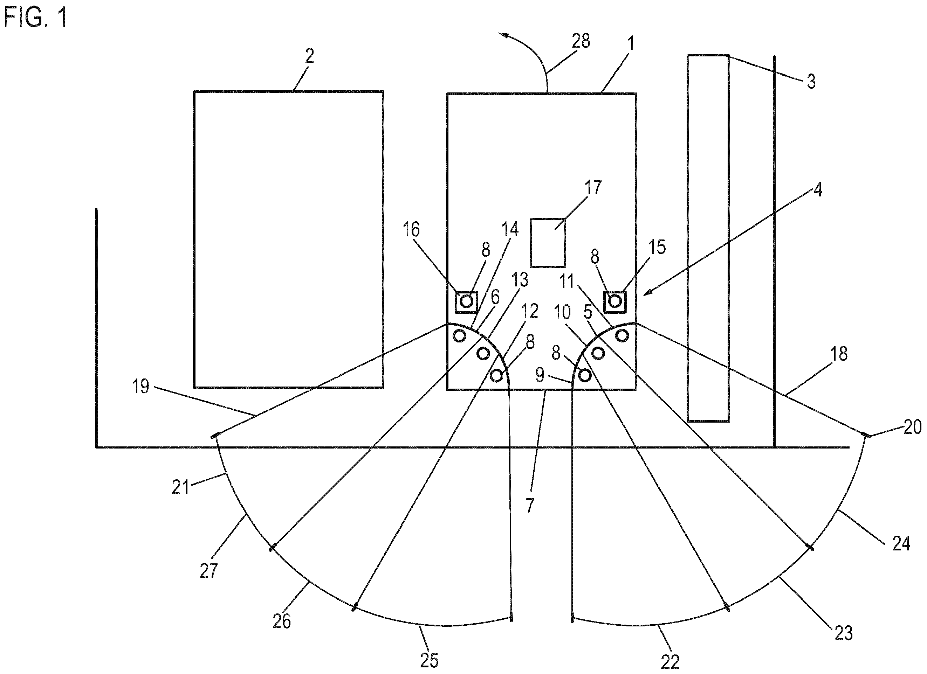

In Fig. 1 ist ein erfindungsgemäßes Kraftfahrzeug 1 dargestellt, welches sich auf einem Parkplatz zwischen einem weiteren Kraftfahrzeug 2 und einem, beispielsweise als Mauer ausgebildeten, Hindernis 3 befindet. Das Kraftfahrzeug 1 umfasst eine Beleuchtungseinrichtung 4, welche zwei Scheinwerfereinrichtungen 5, 6 umfasst, die horizontal versetzt an einer Vorderseite 7 des Kraftfahrzeugs 1 angeordnet sind. Die Scheinwerfereinrichtungen 5, 6 umfassen jeweils mehrere dimmbare Leuchtmittel 8, welche jeweils unterschiedlichen Segmenten 9, 10, 11 der Scheinwerfereinrichtung 5 bzw. unterschiedlichen Segmenten 12, 13, 14 der Scheinwerfereinrichtung 6 zugeordnet sind. Die Beleuchtungseinrichtung 4 umfasst weiterhin zwei Scheinwerfereinrichtungen 15, 16, welche jeweils ein dimmbares Leuchtmittel 8 aufweisen.

Die Scheinwerfereinrichtungen 5, 6, welche jeweils mehrere Leuchtmittel 8 umfassen, sind zur Erzeugung eines Abblendlichts des Kraftfahrzeugs 1 ausgebildet. Die Scheinwerfereinrichtungen 15, 16, welche jeweils ein Leuchtmittel 8 umfassen, sind jeweils zur Erzeugung eines Abbiegelichts des Kraftfahrzeugs 1 ausgebildet.

Das Kraftfahrzeug 1 umfasst ein Steuergerät 17, welches mit den einzelnen Scheinwerfereinrichtungen 5, 6, 15, 16 verbunden ist (Verbindungen hier nicht dargestellt). Durch das Steuergerät 17 kann die Beleuchtungseinrichtung 4 des Kraftfahrzeuges 1 gesteuert werden, wobei durch das Steuergerät 17 die Helligkeiten der Leuchtmittel 8 der Scheinwerfereinrichtungen 5, 6, 15, 16 eingestellt werden können. Das Steuergerät 17 ist weiterhin mit einem Getriebe des Kraftfahrzeugs 1 und/oder mit einem Sensor des Kraftfahrzeugs 1 zur Feststellung einer Lenkradposition und/oder einer Radposition und/oder einem Lenkwinkelsensor des Kraftfahrzeugs 1 verbunden, wobei entsprechende Messwerte und/oder Informationen über einen aktuell eingelegten Gang an das Steuergerät 17 übermittelt werden, um das Vorliegen einer Rückwärtsfahrt, das Vorhandensein und die Richtung eines Lenkeinschlags und/oder einen Lenkwinkel zu bestimmen. Zusätzlich oder alternativ kann das Steuergerät 17 mit einer Lenkungsregelung, einer Fahrwerkselektronik und/oder einer Antriebselektronik des Kraftfahrzeugs 1 verbunden sein, von welchen ebenfalls Informationen zu einer Rückwärtsfahrt, dem Vorliegen eines Lenkeinschlags, einem Lenkwinkel eines Lenkeinschlags und/oder weitere Informationen an das Steuergerät 17 übermittelt werden können.

Die Scheinwerfereinrichtungen 5, 6 umfassen mehrere Segmente 9 bis 14, wobei jedem der Segmente eines der Leuchtmittel 8 der jeweiligen Scheinwerfereinrichtung 5, 6 zugeordnet ist. Die Darstellung von drei Segmenten pro Scheinwerfereinrichtung ist rein schematisch, es können auch Scheinwerfereinrichtungen 5, 6 mit einer größeren Anzahl an Segmenten 9 bis 14 und somit auch mit einer höheren Anzahl an Leuchtmitteln 8 eingesetzt werden. Insbesondere können zwischen 2 und 100 Segmente pro Scheinwerfereinrichtung 5, 6, 15, 16 verwendet werden. Eine beispielsweise als Abbiegelicht verwendete, mehrere Leuchtmittel umfassende Scheinwerfereinrichtung 15, 16 kann z. B. zwischen 2 und 10, insbesondere zwischen 3 und 5, Segmente umfassen. Eine zur Erzeugung eines Abblendlichts ausgebildete Scheinwerfereinrichtung 5, 6 mit mehreren Leuchtmitteln 8 kann eine größere Anzahl von Leuchtmitteln 8, beispielsweise zwischen 10 und 25 Leuchtmitteln 8, umfassen.

Von jeder der Scheinwerfereinrichtungen 5, 6 ist ein Raumbereich 18, 19 vor dem Kraftfahrzeug 1 ausleuchtbar. Der Raumbereich 18 erstreckt sich dabei über einen Winkelbereich 20 und der Raumbereich 19 entsprechend über einen Winkelbereich 21. In Abhängigkeit der von den Leuchtmitteln 8 der Scheinwerfereinrichtung 5 erzeugten Helligkeiten kann durch die verschiedenen Segmente 9 bis 11 der Scheinwerfereinrichtung 5 eine sich über den Winkelbereich 20 des von der Scheinwerfereinrichtung 5 ausgeleuchteten Raumbereichs 18 ergebende Helligkeitsverteilung bzw. eine Dimmkennlinie eingestellt werden.

Durch die Leuchtmittel 8 der Scheinwerfereinrichtung 5 können verschiedene Teilbereiche 22, 23, 24 des von der Scheinwerfereinrichtung 5 ausgeleuchteten Raumbereichs 18 mit unterschiedlichen Helligkeiten ausgeleuchtet werden. Entsprechend können durch die Helligkeiten der Leuchtmittel 8 der Scheinwerfereinrichtung 6 Teilbereiche 25, 26, 27 des von der Scheinwerfereinrichtung 6 ausgeleuchteten Raumbereichs 19 mit unterschiedlichen Helligkeiten ausgeleuchtet werden. Die Helligkeiten der beispielsweise als Leuchtdioden ausgebildeten Leuchtmittel 8 kann z. B. durch Ansteuern der Leuchtmittel 8 durch das Steuergerät 17 mittels Pulsweitenmodulation erfolgen, wobei die Ansteuerung der Leuchtmittel 8 durch das Steuergerät 17 des Kraftfahrzeuges 1 erfolgt.

Der Übersichtlichkeit halber sind die Raumbereiche 18, 19 der Scheinwerfereinrichtungen 5, 6 nicht überlappend dargestellt. Insbesondere bei zur Erzeugung eines Abblendlichts ausgebildeten Scheinwerfereinrichtungen 5, 6 können die Raumbereiche 18, 19 jedoch vor dem Kraftfahrzeug 1 überlappen. Auch eine andere Ausrichtung der Scheinwerfereinrichtungen 5, 6, insbesondere derart, dass die jeweils mittig angeordneten Teilbereiche 23 und 26 direkt nach vorne abstrahlen, ist bei zur Erzeugung eines Abblendlichts ausgebildeten Scheinwerfereinrichtungen 5, 6 möglich. Bei zur Erzeugung eines Abblendlichts ausgebildeten Scheinwerfereinrichtungen 5, 6 kann insbesondere vorgesehen sein, dass die Raumbereiche 18, 19 aneinander anschließen bzw. teilweise überlappen, so dass die jeweils mit vergleichsweise höchster Helligkeit betriebenen Teilbereiche 23, 26 im Normalbetrieb im Wesentlichen nach vorne vor das Kraftfahrzeug 1 gerichtet sind.

Wie schematisch durch den Pfeil 28 dargestellt ist, wird das Kraftfahrzeug 1 zum Ausparken in einer Rückwärtsfahrt bewegt, wobei ein Lenkeinschlag bezogen auf die normale Fahrtrichtung des Kraftfahrzeuges nach rechts erfolgt. Vor oder während einer Rückwärtsfahrt des Kraftfahrzeugs 1 können die Helligkeiten der Leuchtmittel 8 der Scheinwerfereinrichtungen 5, 6, 15, 16 in Abhängigkeit des Lenkeinschlags des Kraftfahrzeugs 1 eingestellt werden. Vor dem Beginn einer Rückwärtsfahrt bzw. vor dem Einlegen eines Rückwärtsgangs im Kraftfahrzeug 1 sind die Scheinwerfereinrichtungen 5, 6 zum Beispiel eingeschaltet und erzeugen jeweils ein Abblendlicht. Dabei wird der Teilbereich 23 des ausleuchtbaren Raumbereichs 18 der Scheinwerfereinrichtung 5 mit der höchsten Helligkeit ausgeleuchtet und die Teilbereiche 22 und 24 jeweils mit einer geringeren Helligkeit. Entsprechend wird der Teilbereich 26 des ausleuchtbaren Raumbereichs 19 der Scheinwerfereinrichtung 6 mit der höchsten Helligkeit ausgeleuchtet und die Teilbereiche 25 und 27 jeweils mit einer geringeren Helligkeit. Auf diese Weise erzeugen die Scheinwerfereinrichtungen 5, 6 eine Helligkeitsverteilung bzw. eine Dimmkennlinie über den jeweiligen Winkelbereich 20 bzw. 21. Die Scheinwerfereinrichtungen 15, 16 zur Erzeugung des Abbiegelichts sind vor dem Beginn einer Rückwärtsfahrt bzw. vor dem Einlegen eines Rückwärtsgangs im Kraftfahrzeug 1 zum Beispiel abgeschaltet.

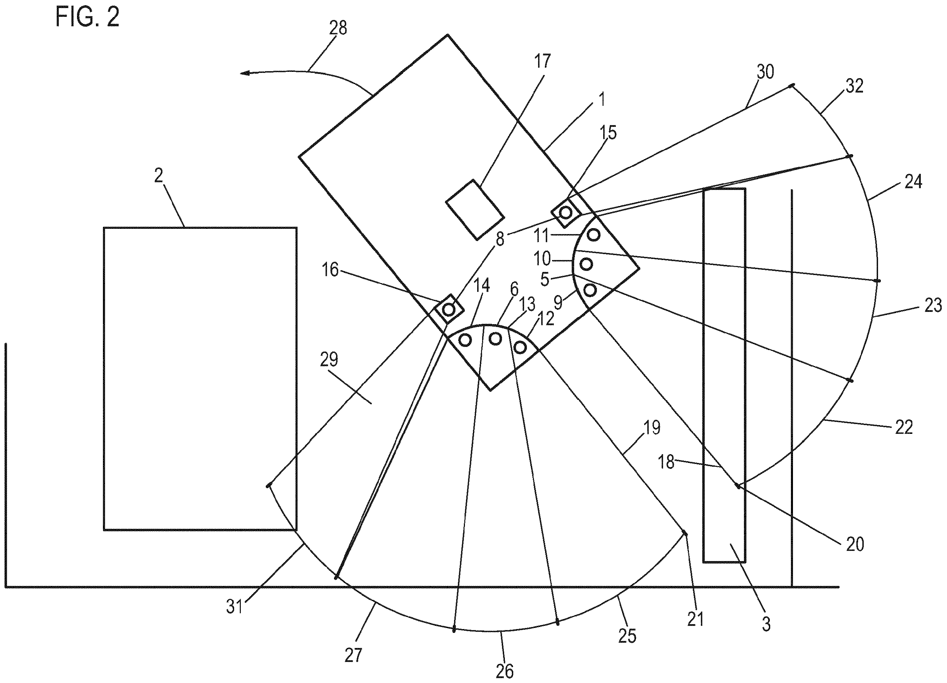

In Fig. 2 ist ausgehend von Fig. 1 eine Situation dargestellt, in der sich das Kraftfahrzeug 1 bereits rückwärts bewegt hat und aufgrund des bezogen auf die normale Fahrtrichtung des Kraftfahrzeugs nach rechts eingeschlagenen Lenkwinkels schräg aus der Parklücke zwischen dem weiteren Kraftfahrzeug 2 und dem Hindernis 3 ausparkt. Um die Sichtbarkeit des Hindernisses 3 bei dieser Rückwärtsfahrt zu verbessern, werden die mehrere Leuchtmittel 8 umfassenden Scheinwerfereinrichtungen 5, 6 mit einer anderen Helligkeitsverteilung in ihrem jeweiligen Raumbereich 18, 19 betrieben. Dazu werden die Leuchtmittel 8 der Scheinwerfereinrichtung 5 derart angesteuert, dass ein der Richtung des Lenkeinschlags gegenüberliegender Teilbereich 24 des Raumbereichs 20 mit einer erhöhten Helligkeit ausgeleuchtet wird.

Dazu kann beispielsweise ausgehend von der Situation in Fig. 1, in der der Teilbereich 22 mit der höchsten Helligkeit und die Teilbereiche 23 und 24 mit einer reduzierten Helligkeit ausgeleuchtet werden, die Helligkeit im Teilbereich 24 erhöht werden, so dass der Teilbereich 24 mit einer erhöhten Helligkeit ausgeleuchtet wird. Entsprechend kann auch der Teilbereich 25 der Scheinwerfereinrichtung 6 mit einer erhöhten Helligkeit ausgeleuchtet werden. Auf diese Weise wird die Helligkeitsverteilung in den Raumbereichen 18, 19 derart geändert, dass die Helligkeitsverteilung der Scheinwerfereinrichtung 5 nach außen geschwenkt und die Helligkeitsverteilung der Scheinwerfereinrichtung 6 nach innen, in Richtung einer Mitte des Kraftfahrzeugs 1, geschwenkt werden. Zusätzlich zum Erhöhen der Helligkeit in den Teilbereichen 24 und 25 kann eine Reduktion der Helligkeit in den Teilbereichen 22 und 27, welche in der Richtung des Lenkeinschlags liegen, vorgenommen werden, um die Ausleuchtung des Hindernisses 3 und/oder anderer, für die Rückwärtsfahrt relevanter Objekte zu verbessern.

Zusätzlich oder alternativ dazu wird die ein Leuchtmittel 8 umfassende Scheinwerfereinrichtung 16, welche in der Richtung des Lenkeinschlags des Kraftfahrzeugs 1 angeordnet ist, gedimmt, so dass ein der Scheinwerfereinrichtung 16 zugeordneter Raumbereich 29, welcher sich über einen horizontalen Winkelbereich 31 erstreckt, mit einer geringeren Helligkeit ausgeleuchtet wird. Dazu kann die Helligkeit des Leuchtmittels 8 der Scheinwerfereinrichtung 16 verringert werden.

Das Leuchtmittel 8 der Scheinwerfereinrichtung 15 und die Leuchtmittel 8 der Scheinwerfereinrichtung 5 werden weiterhin derart angesteuert, dass der von der Scheinwerfereinrichtung 15 ausgeleuchtete Raumbereich 30, welcher sich über einen horizontalen Winkelbereich 32 erstreckt, mit dem Raumbereich 18 der Scheinwerfereinrichtung 5 überlappt oder an diesen anschließt, so dass sich über einen den Raumbereich 18 der Scheinwerfereinrichtung 5 in den Raumbereich 30 der Scheinwerfereinrichtung 15 erstreckenden Gesamtraumbereich eine kontinuierliche Helligkeitsverteilung über den insgesamt umfassten horizontalen Gesamtwinkelbereich der Raumbereiche 18 und 30 ergibt.

Die Helligkeiten, mit denen der Teilbereich 24 und der Teilbereich 25 jeweils ausgeleuchtet werden, werden kontinuierlich oder in Intervallen in Abhängigkeit des Lenkeinschlags, mit dem das Kraftfahrzeug 1 rückwärts bewegt wird, erhöht. Dazu ist das Steuergerät 17 mit einem Lenkwinkelsensor (hier nicht dargestellt) des Kraftfahrzeugs 1 verbunden, über welchen der Lenkwinkel des Kraftfahrzeugs 1 bestimmt werden kann.

Eine Erhöhung der Helligkeit in den der Richtung des Lenkeinschlags gegenüberliegenden Teilbereichen 24, 25 wird vorgenommen, wenn der Lenkwinkel einen Grenzwert überschreitet. Als Grenzwert für den Lenkwinkel können beispielsweise Lenkwinkel zwischen 1° und 25°, insbesondere von 5°, 10°, 15° oder 20° gewählt werden. Dabei kann der Grenzwert für den Lenkwinkel bei einem Lenkeinschlag nach links gleich oder unterschiedlich zu einem Grenzwert für einen Lenkwinkel bei einem Lenkeinschlag nach rechts sein.

Bei einem Lenkeinschlag unterhalb des Grenzwerts können die zur Erzeugung eines Abbiegelichts ausgebildete Scheinwerfereinrichtungen 15, 16 mit einer maximalen Helligkeit betrieben, gedimmt betrieben oder abgeschaltet werden. Ob die zur Erzeugung eines Abbiegelichts ausgebildete Scheinwerfereinrichtungen 15, 16 jeweils mit maximaler Helligkeit betrieben, mit einer gedimmten Helligkeit betrieben oder abgeschaltet werden, kann in dem Steuergerät 17 fest vorgegeben sein oder zum Beispiel in Abhängigkeit einer Umgebungshelligkeit in der Umgebung des Kraftfahrzeugs 1 durch das Steuergerät 17 ausgewählt werden. Auch das Ausmaß bzw. die Stärke einer Dimmung des oder der Leuchtmittel 8 der Scheinwerfereinrichtungen 15, 16 kann zum Beispiel in Abhängigkeit einer Umgebungshelligkeit bestimmt werden.

Bei Scheinwerfereinrichtungen 5, 6, welche mehr als jeweils drei Segmente 9 - 14 aufweisen, kann auch eine Position des jeweils mit erhöhter Helligkeit ausgeleuchteten Teilbereichs in Abhängigkeit des Lenkwinkels verschoben werden, so dass im Falle der Scheinwerfereinrichtung 5 immer weiter nach außen bzw. im Falle der Scheinwerfereinrichtung 6 immer weiter nach innen mit einer erhöhten Helligkeit ausgeleuchtet wird, je stärker eingeschlagen wird bzw. je größer der Lenkwinkel ist.

Auch die Dimmung des Leuchtmittels 8 der zur Erzeugung des Abbiegelichts ausgebildeten Scheinwerfereinrichtung 16 erfolgt in Abhängigkeit des Lenkwinkels, wobei das Dimmen, also das Ausmaß, in dem die Helligkeit auf einen Wert größer 0 gedimmt wird, in Abhängigkeit des Lenkwinkels bestimmt wird. Dabei wird umso stärker gedimmt, also die Helligkeit umso mehr reduziert, je größer der eingeschlagene Lenkwinkel ist. Zusätzlich kann ein Ändern der Helligkeit der Leuchtmittel 8 bzw. ein Dimmen des oder der Leuchtmittel 8 in Abhängigkeit der Umgebungshelligkeit vorgenommen werden, so dass z. B. ein Ändern der Helligkeit bzw. ein Dimmen der Helligkeit nur vorgenommen wird, wenn die Umgebungshelligkeit einen Grenzwert unterschreitet, mithin also eine Umgebungshelligkeit vorliegt, welche das Ausleuchten einer Umgebung des Kraftfahrzeugs 1 erforderlich bzw. nötig macht. Bei einer Verkleinerung des Lenkwinkels, beispielsweise am Ende des Ausparkvorgangs, können die Positionsänderung und/oder die Helligkeitsänderung ebenfalls in Abhängigkeit des Lenkwinkels derart geändert werden, dass sich die Helligkeitsverteilungen der Scheinwerfereinrichtungen 5, 6 wieder dem ursprünglichen Zustand, insbesondere kontinuierlich oder in Intervallen, annähern.

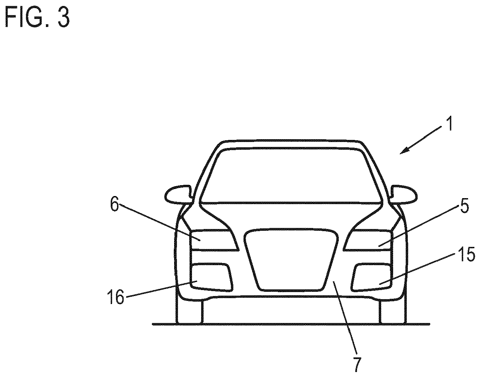

Es ist auch möglich, dass das Kraftfahrzeug 1 Scheinwerfereinrichtungen 15, 16 umfasst, welche mehrere Leuchtmittel 8 aufweisen, über welche ebenfalls entsprechend der Ausführungen zu den Scheinwerfereinrichtungen 5, 6 mehrere Segmente 9 - 14 und somit mehrere Teilbereiche der Raumbereiche 29, 30 ausgeleuchtet werden können. Derartige segmentierte Abbiegelichter können entsprechend der aus den Ausführungen zu den Scheinwerfereinrichtungen 5, 6 betrieben werden, wobei die von den zur Erzeugung eines Abbiegelichts ausgebildeten Scheinwerfereinrichtungen 15, 16 ausgeleuchteten Raumbereiche 29, 30 verglichen mit den Raumbereichen von zur Erzeugung eines Abblendlichts ausgebildeten Scheinwerfereinrichtungen 5, 6 jeweils weiter seitlich vom Kraftfahrzeug 1 abstrahlen. Die zur Erzeugung eines Abbiegelichts ausgebildeten Scheinwerfereinrichtungen 15, 16 können, wie in der Darstellung der Vorderseite 7 des Kraftfahrzeugs 1 in Fig. 3 gezeigt ist, insbesondere unterhalb der zur Erzeugung des Abblendlichts ausgebildeten Scheinwerfereinrichtungen 5, 6 angeordnet sein. Alternativ ist auch eine Anordnung der Scheinwerfereinrichtung 15 seitlich neben der Scheinwerfereinrichtung 5 und eine Anordnung der Scheinwerfereinrichtung 16 seitlich neben der Scheinwerfereinrichtung 6 möglich, wobei die Scheinwerfereinrichtungen 5 und 15 bzw. die Scheinwerfereinrichtungen 6 und 16 jeweils in einem gemeinsamen Gehäuse, insbesondere in einem gemeinsamen Kraftfahrzeugscheinwerfer, angeordnet sein können.

Die Änderung der Helligkeit zur Ausleuchtung der Teilbereiche 24, 25 mit einer erhöhten Helligkeit und die Dimmung des Leuchtmittels 8 der Scheinwerfereinrichtung 16 können rückgängig gemacht werden, wenn die Rückwärtsfahrt beendet wird, insbesondere wenn ein erster Gang, eine Fahrstellung (D) oder eine Neutralstellung (N) eines Getriebes eingestellt wird, und/oder wenn eine Geschwindigkeit des Kraftfahrzeugs 1 in Vorwärtsrichtung einen Geschwindigkeitsschwellwert überschreitet. Auch ist es möglich, dass bei Aufnahme einer Vorwärtsfahrt bzw. bei der Überschreibung des Geschwindigkeitsgrenzwerts die zur Erzeugung des Abbiegelichts ausgebildeten Scheinwerfereinrichtungen 15, 16 abgeschaltet werden und eine Ausleuchtung des Fahrzeugvorfelds insbesondere nur über die zur Erzeugung des Abblendlichts ausgebildeten Scheinwerfereinrichtungen 5, 6 vorgenommen wird.

## Patentansprüche

1. Verfahren zum Betrieb eines Kraftfahrzeugs (1), wobei das Kraftfahrzeug (1) eine wenigstens zwei Scheinwerfereinrichtungen (5, 6, 15, 16) umfassende Beleuchtungseinrichtung (4) aufweist, wobei die Scheinwerfereinrichtungen (5, 6, 15, 16) horizontal versetzt an einer Vorderseite (7) des Kraftfahrzeugs (1) angeordnet sind und jeweils ein oder mehrere dimmbare Leuchtmittel (8) aufweisen, wobei durch jede Scheinwerfereinrichtung (5, 6, 15, 16) in Abhängigkeit einer jeweils von dem oder den Leuchtmitteln (8) erzeugten Helligkeit ein sich über einen horizontalen Winkelbereich (20, 21, 32, 33) vor dem Kraftfahrzeug (1) erstreckender Raumbereich (18, 19, 29, 30) ausleuchtbar ist, wobei vor einer Rückwärtsfahrt bei eingelegtem Rückwärtsgang oder während einer Rückwärtsfahrt des Kraftfahrzeugs (1) in Abhängigkeit eines Lenkeinschlags des Kraftfahrzeugs (1) die Helligkeiten des oder der Leuchtmittel (8) wenigstens einer der Scheinwerfereinrichtungen (5, 6, 15, 16) eingestellt werden,
- wobei bei Verwendung von mehreren Leuchtmitteln (8) umfassenden Scheinwerfereinrichtungen (5, 6, 15, 16) die Leuchtmittel (8) jeweils unterschiedliche Teilbereiche (22 - 27) eines Raumbereichs (18, 19, 29, 30) ausleuchten und derart eingestellt werden, dass wenigstens ein der Richtung des Lenkeinschlags gegenüberliegender Teilbereich (22 - 27) des jeweiligen Raumbereichs (18, 19, 29, 30) mit einer erhöhten Helligkeit ausgeleuchtet wird und wenigstens ein in der Richtung des Lenkeinschlags liegender Teilbereich (22 - 27) des jeweiligen Raumbereichs (18, 19, 29, 30) mit einer reduzierten Helligkeit ausgeleuchtet wird, und/oder
- wobei bei Verwendung von wenigstens ein Leuchtmittel (8) umfassenden Scheinwerfereinrichtungen (5, 6, 15, 16) das wenigstens eine Leuchtmittel (8) den Raumbereich (18, 19, 29, 30) einer in Richtung des Lenkeinschlags angeordneten Scheinwerfereinrichtung (5, 6, 15, 16) ausleuchtet und die Helligkeit des wenigstens einen Leuchtmittels (8) auf einen Wert größer null verringert wird.

2. Verfahren nach Anspruch 1,
**dadurch gekennzeichnet,**
**dass** als die mehrere Leuchtmittel (8) umfassenden Scheinwerfereinrichtungen (5, 6, 15, 16) zur Erzeugung eines Abbiegelichts und/oder zur Erzeugung eines Abblendlichts ausgebildete Scheinwerfereinrichtungen (5, 6, 15, 16) verwendet werden.

3. Verfahren nach Anspruch 2,
**dadurch gekennzeichnet,**
**dass** Scheinwerfereinrichtungen (5, 6, 15, 16) mit wenigstens zwei Segmenten (8 - 14) verwendet werden, wobei jedem Segment (8 - 14) einer der Scheinwerfereinrichtungen (5, 6, 15, 16) wenigstens eines der Leuchtmittel (8) der Scheinwerfereinrichtung (5, 6, 15, 16) zugeordnet ist und jedes Segment (8 - 14) zur Ausleuchtung eines Teilbereichs (22 - 27) des Raumbereichs (18, 19, 29, 30) ausgebildet ist.

4. Verfahren nach einem der Ansprüche 2 oder 3,
**dadurch gekennzeichnet,**
**dass** die Leuchtmittel (8) einer zur Erzeugung eines Abblendlichts ausgebildeten Scheinwerfereinrichtung (5, 6, 15, 16) und das oder die Leuchtmittel (8) einer zur Erzeugung eines Abbiegelichts ausgebildeten Scheinwerfereinrichtung (5, 6, 15, 16) derart angesteuert werden, dass die jeweils ausgeleuchteten Raumbereiche (18, 19, 29, 30) aneinander anschließen oder teilweise überlappen, wobei eine zumindest im Wesentlichen kontinuierliche Helligkeitsverteilung über den sich ergebenden horizontalen Gesamtwinkelbereich erzeugt wird.

5. Verfahren nach einem der vorangehenden Ansprüche,
**dadurch gekennzeichnet,**
**dass** die Helligkeit, mit der der Teilbereich (22 - 27) ausgeleuchtet wird, in Abhängigkeit eines Lenkwinkels des Lenkeinschlags, insbesondere kontinuierlich oder in Intervallen, erhöht wird.

6. Verfahren nach einem der vorangehenden Ansprüche,
**dadurch gekennzeichnet,**
**dass** die Position des Teilbereichs bezogen auf den horizontalen Winkelbereich (20, 21, 32, 33) des Raumbereichs (18, 19, 29, 30) in Abhängigkeit eines Lenkwinkels des Lenkeinschlags, insbesondere kontinuierlich oder in Intervallen, geändert wird.

7. Verfahren nach einem der vorangehenden Ansprüche,
**dadurch gekennzeichnet,**
**dass** die Helligkeit des wenigstens einen Leuchtmittels (8) einer in der Richtung des Lenkeinschlags angeordneten und zur Erzeugung eines Abbiegelichts ausgebildeten Scheinwerfereinrichtung (5, 6, 15, 16) gedimmt wird.

8. Verfahren nach einem der vorangehenden Ansprüche,
**dadurch gekennzeichnet,**
**dass** die Helligkeit des wenigstens einen Leuchtmittels (8) der in der Richtung des Lenkeinschlags angeordneten Scheinwerfereinrichtung (5, 6, 15, 16) in Abhängigkeit eines Lenkwinkels des Lenkeinschlags, insbesondere kontinuierlich oder in Intervallen, gedimmt wird.

9. Verfahren nach einem der vorangehenden Ansprüche,
**dadurch gekennzeichnet,**
**dass** die Helligkeit der Leuchtmittel (8) in Abhängigkeit einer Umgebungshelligkeit eingestellt wird und/oder dass die Helligkeit des Leuchtmittels (8) in Abhängigkeit der Umgebungshelligkeit gedimmt wird.

10. Verfahren nach einem der vorangehenden Ansprüche,
**dadurch gekennzeichnet,**
**dass** die Helligkeit der Leuchtmittel (8) erst bei Überschreiten wenigstens eines Grenzwerts für den Lenkwinkel des Lenkeinschlags eingestellt wird und/oder dass die Helligkeit des Leuchtmittels (8) erst bei Überschreiten wenigstens eines Grenzwerts für den Lenkwinkel des Lenkeinschlags gedimmt wird.

11. Verfahren nach Anspruch 10,
**dadurch gekennzeichnet,**
**dass** bei einem Lenkeinschlag unterhalb des Grenzwerts wenigstens ein Leuchtmittel (8) umfassende und zur Erzeugung eines Abbiegelichts ausgebildete Scheinwerfereinrichtungen (5, 6, 15, 16) mit einer maximalen Helligkeit betrieben, gedimmt betrieben oder abgeschaltet werden.

12. Verfahren nach Anspruch 10 oder 11,
**dadurch gekennzeichnet,**
**dass** der Grenzwert für den Lenkwinkel für einen Lenkeinschlag nach links und für einen Lenkeinschlag nach rechts gleich oder unterschiedlich ist.

13. Verfahren nach einem der vorangehenden Ansprüche,
**dadurch gekennzeichnet,**
**dass** die Änderung der Helligkeit und/oder die Dimmung rückgängig gemacht und/oder wenigstens eine der Scheinwerfereinrichtungen (5, 6, 15, 16) ausgeschaltet wird, wenn die Rückwärtsfahrt beendet wird und/oder wenn eine Geschwindigkeit des Kraftfahrzeugs in Vorwärtsrichtung einen Geschwindigkeitsschwellwert überschreitet.

14. Kraftfahrzeug umfassend eine wenigstens zwei Scheinwerfereinrichtungen (5, 6, 15, 16) umfassende Beleuchtungseinrichtung (4) sowie ein Steuergerät (17) zur Steuerung der Beleuchtungseinrichtung (4), wobei die Scheinwerfereinrichtungen (5, 6, 15, 16) horizontal versetzt an einer Vorderseite des Kraftfahrzeugs (1) angeordnet sind und jeweils ein oder mehrere dimmbare Leuchtmittel (8) aufweisen, wobei durch jede Scheinwerfereinrichtung (5, 6, 15, 16) in Abhängigkeit einer jeweils von dem wenigstens einen Leuchtmittel (8) erzeugten Helligkeit ein sich über einen horizontalen Winkelbereich (20, 21, 32, 33) vor dem Kraftfahrzeug (1) erstreckender Raumbereich (18, 19, 29, 30) ausleuchtbar ist, wobei das Steuergerät (17) zur Durchführung eines Verfahrens nach einem der vorangehenden Ansprüche ausgebildet ist.

## Claims

1. Method for operating a motor vehicle (1), wherein the motor vehicle (1) has a lighting device (4) comprising at least two headlamp devices (5, 6, 15, 16), wherein the headlamp devices (5, 6, 15, 16) are arranged horizontally offset on a front side (7) of the motor vehicle (1) and each have one or more dimmable illuminants (8), wherein a spatial region (18, 19, 29, 30) extending over a horizontal angular range (20, 21, 32, 33) in front of the motor vehicle (1) is able to be illuminated by each headlamp device (5, 6, 15, 16) in a manner dependent on a luminosity generated in each case by the illuminant or illuminants (8), wherein the luminosities of the illuminant or illuminants (8) of at least one of the headlamp devices (5, 6, 15, 16) are set in a manner dependent on a wheel angle of the motor vehicle (1) prior to a rearward drive in the case of an engaged reverse gear or during a rearward drive of the motor vehicle (1),
- wherein, if use is made of headlamp devices (5, 6, 15, 16) comprising a plurality of illuminants (8), the illuminants (8) each illuminate different portions (22-27) of a spatial region (18, 19, 29, 30) and are set such that at least one portion (22-27) of the respective spatial region (18, 19, 29, 30) opposite the direction of the wheel angle is illuminated with an increased luminosity and at least one portion (22-27) of the respective spatial region (18, 19, 29, 30) in the direction of the wheel angle is illuminated with a reduced luminosity, and/or
- wherein, if use is made of headlamp devices (5, 6, 15, 16) comprising at least one illuminant (8), the at least one illuminant (8) illuminates the spatial region (18, 19, 29, 30) of a headlamp device (5, 6, 15, 16) arranged in the direction of the wheel angle and the luminosity of the at least one illuminant (8) is reduced to a value greater than zero.

2. Method according to Claim 1,
**characterized**
**in that** headlamp devices (5, 6, 15, 16) designed to generate a cornering light and/or to generate a dipped light are used as the headlamp devices (5, 6, 15, 16) comprising a plurality of illuminants (8).

3. Method according to Claim 2,
**characterized**
**in that** use is made of headlamp devices (5, 6, 15, 16) with at least two segments (8-14), wherein each segment (8-14) of one of the headlamp devices (5, 6, 15, 16) is assigned at least one of the illuminants (8) of the headlamp device (5, 6, 15, 16) and each segment (8-14) is designed to illuminate a portion (22-27) of the spatial region (18, 19, 29, 30).

4. Method according to either of Claims 2 and 3,
**characterized**
**in that** the illuminants (8) of a headlamp device (5, 6, 15, 16) designed to generate a dipped light and the illuminant or illuminants (8) of a headlamp device (5, 6, 15, 16) designed to generate a cornering light are controlled so that the respectively illuminated spatial regions (18, 19, 29, 30) adjoin one another or overlap in part, wherein a luminosity distribution that is at least substantially continuous is generated over the arising horizontal overall angular range.

5. Method according to any of the preceding claims,
**characterized**
**in that** the luminosity with which the portion (22-27) is illuminated is increased, especially continuously or at intervals, on the basis of a steering angle of the wheel angle.

6. Method according to any of the preceding claims,
**characterized**
**in that** the position of the portion in relation to the horizontal angular range (20, 21, 32, 33) of the spatial region (18, 19, 29, 30) is changed, especially continuously or at intervals, on the basis of a steering angle of the wheel angle.

7. Method according to any of the preceding claims,
**characterized**
**in that** the luminosity of the at least one illuminant (8) of a headlamp device (5, 6, 15, 16) arranged in the direction of the wheel angle and designed to generate a cornering light is dimmed.

8. Method according to any of the preceding claims,
**characterized**
**in that** the luminosity of the at least one illuminant (8) of the headlamp device (5, 6, 15, 16) arranged in the direction of the wheel angle is dimmed, especially continuously or at intervals, on the basis of a steering angle of the wheel angle.

9. Method according to any of the preceding claims,
**characterized**
**in that** the luminosity of the illuminants (8) is set on the basis of an ambient brightness and/or in that the luminosity of the illuminant (8) is dimmed on the basis of the ambient brightness.

10. Method according to any of the preceding claims,
**characterized**
**in that** the luminosity of the illuminants (8) is only set when at least one limit value for the steering angle of the wheel angle is exceeded and/or in that the luminosity of the illuminant (8) is only dimmed when at least one limit value for the steering angle of the wheel angle is exceeded.

11. Method according to Claim 10,
**characterized**
**in that**, in the case of a wheel angle below the limit value, headlamp devices (5, 6, 15, 16) comprising at least one illuminant (8) and designed to generate a cornering light are operated with a maximum luminosity, are operated in dimmed fashion or are switched off.

12. Method according to Claim 10 or 11,
**characterized**
**in that** the limit values for the steering angle for a wheel angle to the left and for a wheel angle to the right are the same or differ.

13. Method according to any of the preceding claims,
**characterized**
**in that** the change in the luminosity and/or the dimming is reversed and/or at least one of the headlamp devices (5, 6, 15, 16) is switched off if the rearward drive is terminated and/or if a speed of the motor vehicle in the forward direction exceeds a speed threshold value.

14. Motor vehicle comprising a lighting device (4) comprising at least two headlamp devices (5, 6, 15, 16) and a controller (17) for controlling the lighting device (4), wherein the headlamp devices (5, 6, 15, 16) are arranged horizontally offset on a front side of the motor vehicle (1) and each have one or more dimmable illuminants (8), wherein a spatial region (18, 19, 29, 30) extending over a horizontal angular range (20, 21, 32, 33) in front of the motor vehicle (1) is able to be illuminated by each headlamp device (5, 6, 15, 16) in a manner dependent on a luminosity generated in each case by the at least one illuminant (8), wherein the controller (17) is designed to implement a method according to any of the preceding claims.

## Revendications

1. Procédé de fonctionnement d'un véhicule automobile (1), le véhicule automobile (1) comportant un dispositif d'éclairage (4) qui comprend au moins deux dispositifs formant phares (5, 6, 15, 16), les dispositifs formant phares (5, 6, 15, 16) étant disposés de manière décalée horizontalement sur un côté avant (7) du véhicule automobile (1) et comportant chacun un ou plusieurs moyens d'éclairage à intensité variable (8), chaque dispositif formant phare (5, 6, 15, 16) pouvant éclairer une zone d'espace (18, 19, 29, 30) qui s'étend sur une plage angulaire horizontale (20, 21, 32, 33) devant le véhicule automobile (1) en fonction de la luminosité générée par chacun des un ou plusieurs moyens d'éclairage (8), la luminosité des un ou plusieurs moyens d'éclairage (8) d'au moins un des dispositifs formant phares (5, 6, 15, 16) étant réglée en fonction du braquage du véhicule automobile (1) avant de reculer avec la marche arrière engagée ou pendant que le véhicule automobile (1) est en marche arrière,
- lors de l'utilisation de dispositifs formant phares (5, 6, 15, 16) comprenant plusieurs moyens d'éclairage (8), les moyens d'éclairage (8) éclairant chacun différentes sous-zones (22-27) d'une zone d'espace (18, 19, 29, 30) et étant réglés de manière qu'au moins une sous-zone (22-27) de la zone d'espace respective (18, 19, 29, 30) opposée à la direction du braquage soit éclairée avec une luminosité accrue et qu'au moins une sous-zone (22-27) de la zone d'espace respective située dans la direction du braquage (18, 19, 29, 30) soit éclairée avec une luminosité réduite, et/ou
- lors de l'utilisation de dispositifs formant phares (5, 6, 15, 16) comprenant au moins un moyen d'éclairage (8), l'au moins un moyen d'éclairage (8) éclairant la zone d'espace (18, 19, 29, 30) d'un dispositif formant phare (5, 6, 15, 16) disposé dans la direction du braquage et la luminosité de l'au moins un moyen d'éclairage (8) étant réduite à une valeur supérieure à zéro.

2. Procédé selon la revendication 1, **caractérisé en ce que** des dispositifs formant phares (5, 6, 15, 16) qui sont conçus pour générer un éclairage de virage et/ou pour générer un feu de croisement sont utilisés comme les dispositifs formant phares (5, 6, 15, 16), comprenant des moyens d'éclairage (8).

3. Procédé selon la revendication 2, **caractérisé en ce que** des dispositifs de phare (5, 6, 15, 16) comprenant au moins deux segments (8-14) sont utilisés, chaque segment (8-14) de l'un des dispositifs formant phare (5, 6, 15, 16) étant associé à au moins un des moyens d'éclairage (8) du dispositif formant phare (5, 6, 15, 16) et chaque segment (8-14) étant conçu pour éclairer une sous-zone (22-27) de la zone d'espace (18, 19, 29, 30) .

4. Procédé selon l'une des revendications 2 ou 3, **caractérisé en ce que** les moyens d'éclairage (8) d'un dispositif formant phare (5, 6, 15, 16) conçu pour générer un feu de croisement et l'au moins un moyen d'éclairage (8) d'un dispositif formant phare (5, 6, 15, 16) conçu pour générer un feu de virage sont commandés de manière que les zones d'espace éclairées (18, 19, 29, 30) soient adjacentes les unes aux autres ou se chevauchent partiellement, une distribution de luminosité au moins sensiblement continue étant générée sur la plage angulaire totale horizontale résultante.

5. Procédé selon l'une des revendications précédentes, **caractérisé en ce que** la luminosité avec laquelle la sous-zone (22-27) est éclairée est augmentée, notamment en continu ou par intervalles, en fonction d'un angle de direction du braquage.

6. Procédé selon l'une des revendications précédentes, **caractérisé en ce que** la position de la sous-zone est modifiée par rapport à la plage angulaire horizontale (20, 21, 32, 33) de la zone d'espace (18, 19, 29, 30), en particulier en continu ou par intervalles en fonction d'un angle de direction du braquage.

7. Procédé selon l'une des revendications précédentes, **caractérisé en ce que** la luminosité de l'au moins un moyen d'éclairage (8) d'un dispositif formant phare (5, 6, 15, 16) disposé dans la direction du braquage et conçu pour générer une lumière de virage est atténuée.

8. Procédé selon l'une des revendications précédentes, **caractérisé en ce que** la luminosité de l'au moins un moyen d'éclairage (8) d'un dispositif formant phare (5, 6, 15, 16) disposé dans la direction du braquage est atténuée, en particulier en continu ou par intervalles, en fonction d'un angle de direction du braquage.

9. Procédé selon l'une des revendications précédentes, **caractérisé en ce que** la luminosité des moyens d'éclairage (8) est réglée en fonction de la luminosité ambiante et/ou **en ce que** la luminosité des moyens d'éclairage (8) est atténuée en fonction de la luminosité ambiante.

10. Procédé selon l'une des revendications précédentes, **caractérisé en ce que** la luminosité des moyens d'éclairage (8) n'est réglée que lorsqu'au moins une valeur limite de l'angle de direction du braquage est dépassée et/ou **en ce que** la luminosité du moyen d'éclairage (8) n'est atténuée que lorsqu'au moins une valeur limite de l'angle de direction du braquage est dépassée.

11. Procédé selon la revendication 10, **caractérisé en ce que**, lorsqu'un braquage est inférieur à la valeur limite, des dispositifs formant phares (5, 6, 15, 16) comprenant au moins un moyen d'éclairage (8) et conçus pour générer un éclairage de virage fonctionnent avec une luminosité maximale, fonctionnent de manière atténuée ou sont éteints.

12. Procédé selon la revendication 10 ou 11, **caractérisé en ce que** la valeur limite de l'angle de direction d'un braquage est la même ou différente pour un braquage à gauche et un braquage à droite.

13. Procédé selon l'une des revendications précédentes, **caractérisé en ce que** la modification de la luminosité et/ou l'atténuation sont annulées et/ou au moins un des dispositifs formant phares (5, 6, 15, 16) est éteint lorsque la marche arrière est terminée et/ou lorsqu'une vitesse du véhicule automobile en marche avant dépasse une valeur de vitesse seuil.

14. Véhicule automobile comprenant un dispositif d'éclairage (4), qui comprend au moins deux dispositifs formant phares (5, 6, 15, 16), et une unité de commande (17) destinée à commander le dispositif d'éclairage (4), les dispositifs formant phares (5, 6, 15, 16) étant disposés de manière décalée horizontalement sur un côté avant du véhicule automobile (1) et comportant chacun un ou plusieurs moyens d'éclairage (8) qui peuvent être atténués, chaque dispositif formant phare (5, 6, 15, 16) pouvant éclairer, en fonction de la luminosité générée par au moins un moyen d'éclairage (8), une zone d'espace (18, 19, 29, 30) qui s'étend sur une plage angulaire horizontale (20, 21, 32, 33) située devant le véhicule automobile (1), l'unité de commande (17) étant conçue pour mettre en œuvre un procédé selon l'une des revendications précédentes.
